## Europäisches Patentamt
## European Patent Office
## Office européen des brevets

(19)

(11) Veröffentlichungsnummer : **0 040 708**
**B1**

(12) **EUROPÄISCHE PATENTSCHRIFT**

(45) Veröffentlichungstag der Patentschrift :
05.10.83

(21) Anmeldenummer : 81103205.1

(22) Anmeldetag : 29.04.81

(51) Int. Cl.³ : **B 65 G 53/46, B 28 C 7/00**

(54) Materialzuspeiser für Anlagen zum pneumatischen Fördern von Schüttgütern.

(30) Priorität : 27.05.80 CH 4113/80

(43) Veröffentlichungstag der Anmeldung :
02.12.81 Patentblatt 81/48

(45) Bekanntmachung des Hinweises auf die Patenterteilung : 05.10.83 Patentblatt 83/40

(84) Benannte Vertragsstaaten :
AT CH DE FR GB IT LI

(56) Entgegenhaltungen :
DE B 2 430 816
GB A 276 344
US A 2 314 031
US A 3 076 580

(73) Patentinhaber : Aliva Aktiengesellschaft
Beilikonerstrasse 218
CH-8967 Widen-Mutschellen (CH)

(72) Erfinder : Egli, Ernst
Querstrasse 3
CH-8951 Fahrweid (CH)

(74) Vertreter : Troesch, Hans Alfred, Dr. Ing. et al
Walchestrasse 19
CH-8035 Zürich (CH)

EP 0 040 708 B1

### Materialzuspeiser für Anlagen zum pneumatischen Fördern von Schüttgütern

Die Erfindung betrifft einen Materialzuspeiser für Anlagen zum pneumatischen Fördern von Schüttgütern, vorzugsweise grobkörnigen Gütern, z. B. Betontrockengemisch, mit Einfülltrichter und Rührwerk, mit einem Rotor-Schleusendosator mit senkrechter Drehachse, mit feststehenden, den Zuspeiserotor begrenzenden und abdichtenden Stirnscheiben, mit je einer Oeffnung in den Stirnscheiben für den Gutseinlauf und den Gutsauslauf sowie mit einem Druckluftanschluss in den Gutsauslaufbereich mit anschliessender Förderleitung und mindestens einer, vorzugsweise ins Freie führenden, Oeffnung zur Druckentlastung zumindest eines Teils der Kammern des Rotor-Schleusendosators.

Es sind Betonfördermaschinen mit Materialzuspeisern bekannt, die nach dem Rotorprinzip arbeiten.

Bei diesen gelangt das Trockengemisch durch einen offenen Einfülltrichter über einen beidseitig mit Gummischeiben abgedichteten Zuspeiserotor mit senkrechter Drehachse in die Förderleitung. Der Rotor weist durchgehende zylindrische oder segmentförmige Kammern auf. Durch die Drehung des Rotors gelangen diese Kammern nacheinander unter eine Eintrittsöffnung, wo das im Einfülltrichter durch den Rührstern bewegte Trockengemisch in sie hineinfällt. Gefüllt gelangen die Rotorkammern zur gegenüberliegenden Austrittsöffnung, wo von oben drückende Pressluft das Fördergut nach unten in die Abblaskammer und von da in die Förderleitung treibt. Die leere, aber unter Druck stehende Kammer wird nach ca. 1/4-Drehung kurz vor der Eintrittsöffnung entlüftet, damit das Fördergut bei entspannter Luft wieder in die Kammer fallen kann. Auf die gleiche Weise wiederholt sich der Vorgang bei jeder Kammer und Umdrehung.

Bei derartigen Betonmaschinen wird das für den Abbindeprozess benötigte Wasser am Ende des Förderschlauches in einer Spritzvorrichtung beigegeben.

Diese bekannten Maschinen haben den Nachteil, dass der Zuspeiserotor und die ihn abdeckenden Scheiben einem grossen Verschleiss unterliegen, da sie den Rotor unter hohem Anpressdruck nach aussen und innen. bezüglich Luftdruck abdichten müssen. Der abzudichtende Druck ist gleich dem zur Förderung des Trockenmaterials benötigten Luftdruck.

Die dabei auftretenden grossen Kräfte können nur mit einer entsprechend schweren Bauweise aufgenommen und übertragen werden.

Die entleerte, unter Druck stehende Rotorkammer muss kurz vor der Materialeintrittsöffnung entlüftet werden. Bei beginnendem Verschleiss bahnt sich die Druckluft einen Weg von der Ausblas- zur Entlüftungsöffnung, was den Verschleiss erhöht und im schlimmsten Fall zur Unbrauchbarkeit der Dichtungsplatte führen kann.

Verschlissene Platten führen immer zu Staubentwicklung. Staubhaltige Luft tritt bei der Entlüftungsöffnung und im Bereich der unter Druck gesetzten Rotorkammern zwischen Dichtungsplatten und Rotor aus.

Bei genauer Analyse stellt man fest, dass für die schwere Bauweise, den Verschleiss und das Auftreten von Staub vor allem das Druckgefälle $\Delta p$ von Förderdruck zu Umgebungsdruck verantwortlich ist. Es ist m.a.W. das herrschende $\Delta p$ der Grund für die Schwierigkeiten beim Abdichten und Dichthalten des Rotors mit den Folgeerscheinungen, wie Verschleiss und Staub.

Für den Staub, den Verschleiss und die schwere, unhandliche Bauweise ist somit der Förderdruck verantwortlich. Andere Faktoren wie z. B. das Fördergut, das natürlich Staub und Verschleiss auch mitbestimmt, können mit der Fördermaschine nicht beeinflusst werden.

Es sind auch Maschinen bekannt, bei denen der Zuspeiserotor durch einen Mantel abgedeckt ist. Mittels Verbindungsschläuchen wird dieser Mantel an eine Filteranlage angeschlossen. Der Unterdruck um den Rotor vergrössert aber das Druckgefälle $\Delta p$, was zu noch schlechteren Bedingungen führt.

Der Erfindung liegt die Aufgabe zugrunde, einen Materialzuspeiser zum Fördern von Trockengemisch o. dgl. der eingangs beschriebenen Art zu schaffen, welcher die Mängel der bekannten Ausführungen weitgehendst eliminiert, indem das Druckgefälle $\Delta p$ reduziert werden kann und indem der Abstand der unter Druck stehenden Rotorkammer von der drucklosen Kammer wesentlich, z. B. um den Weg einer halben Umdrehung, verlängert wird.

Diese Aufgabe löst der erfindungsgemässe Materialzuspeiser, der sich dadurch auszeichnet, dass der Rotor-Schleusendosator mindestens zwei Rotoren, nämlich einen Zuspeiserotor und einen durch einen Zwischenflansch oder eine Zwischenscheibe hiervon getrennten Ausgangsrotor aufweist, wobei der Zwischenflansch mit einem Durchgang versehen ist, derart, dass jeweils eine Materialkammer zweier einander zugeordneter Rotoren mit dem Durchgang des Zwischenflansches zur Koinzidenz bringbar ist und wobei mindestens der Zuspeiserotor zusätzliche mit Druckluft aus der zugeordneten Kammer des darunterliegenden Rotors beaufschlagbare Kammern aufweist.

Ein Ausführungsbeispiel des Erfindungsgegenstandes wird anschliessend anhand einer Zeichnung erläutert.

Es zeigen :

Figur 1 einen Meridianschnitt durch einen Materialzuspeiser,

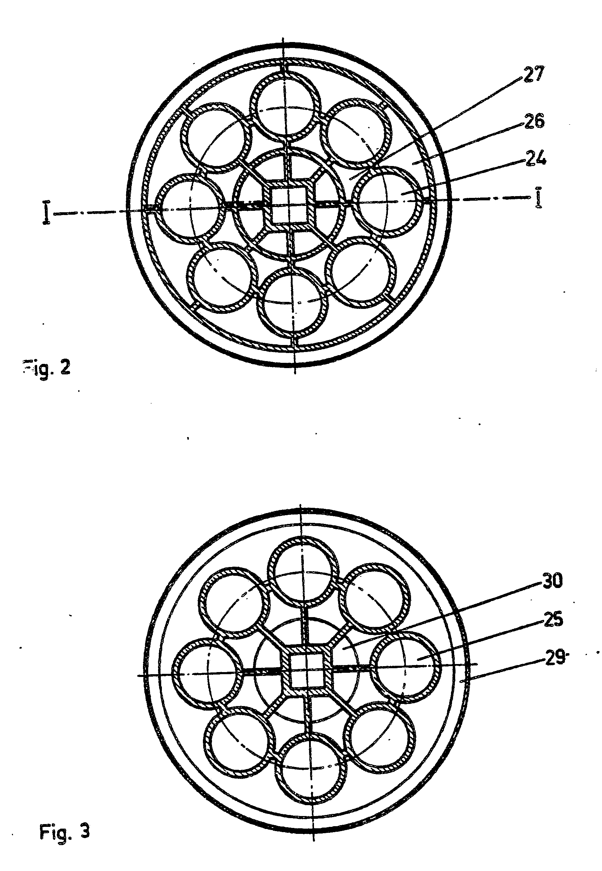

Figur 2 einen Schnitt nach Linie II-II der Fig. 1,

Figur 3 einen Schnitt nach Linie III-III der Fig. 1.

Der Materialzuspeiser besitzt einen nach oben offenen Trichter 1. Er ist auf einem, durch Arretierstützen (nicht dargestellt) gegen Verdrehen gesicherten Endflansch 2 mit einer Eintrittsöffnung 3 festgeklemmt. An der Unterseite des Endflansches 2 ist eine aus verschleissfestem Gummi hergestellte Dichtungsplatte 4 angebracht. Die Dichtungsplatte 4 dichtet einen sich drehenden oberen Rotor, den Zuspeiserotor 5 nach oben ab. Nach unten dichtet eine Dichtungsplatte 6. Diese Dichtungsplatte 6 ist auf einem gegen Verdrehen gesicherten Zwischenflansch 7 mit einem Uebergabedurchgang 8 befestigt. Unterer und oberer Oeffnungsdurchmesser in radialer Richtung sind gleich bzw. grösser als diejenigen der anliegenden Kammerdurchmesser der Materialkammern. In Umfangsrichtung sind erstere wegen der Drehung grösser (Füll- bzw. Entleerungszeiten). Der Zuspeiserotor 5 wird mit einem Mantelrohr 9, das mittels Dichtungen 10 druckdicht mit dem Endflansch 2 und dem Zwischenflansch 7 verbunden ist, dicht abgeschlossen. Im Zwischenflansch 7 gegenüber dem Uebergabedurchgang 8 befindet sich ein Druckluftanschluss 11. Eine Antriebswelle 12 wird im Zwischenflansch 7 durch eine Dichtung 13 abgedichtet. Auf der Unterseite des Zwischenflansches 7 ist eine weitere Dichtungsplatte 14 angebracht, die einen sich drehenden unteren Rotor 15 nach oben abdichtet. Eine weitere Dichtungsplatte 16, die den unteren Rotor 15 nach unten abdichtet, ist auf einer Grundplatte 17 befestigt. Die sich in der Grundplatte 17 befindende Austrittsöffnung 18 mündet in eine Abblaskammer 19. Eine vom Getriebe (nicht dargestellt) kommende Antriebswelle 20, die sich als Welle 12 fortsetzt, wird durch eine Dichtung 21 hindurchgeführt. Der untere Rotor 15 wird mit einem Mantelrohr 22, das mittels Dichtungen 23 mit dem Zwischenflansch 7 und der Grundplatte 17 verbunden ist, druckdicht abgeschlossen. Mit Spannvorrichtungen (nicht dargestellt) wird der Endflansch 2 mit der Grundplatte 17 zusammengespannt, so dass die Dichtungsplatten 4, 6, 14 und 16 mit dem zum Dichten nötigen Druck auf den Rotoren 5 und 15 aufliegen.

Im Gegensatz zu den herkömmlichen Materialzuspeisern hat die erfindungsgemässe Ausführung mindestens zwei übereinander angeordnete, durch den Zwischenflansch 7 getrennte, sich synchron drehende Rotoren 5 und 15. Beide Rotoren 5 und 15 haben die gleiche Anzahl durchgehender Bohrungen, d. h. oben und unten offene Rotorkammern 24 und 25, die das Fördergut übernehmen und von der Eintrittsöffnung 3 zur Austrittsöffnung 18 transportieren. Beim Zuspeiserotor 5 sind um die durchgehenden Rotorkammern 24 zusätzliche, oben geschlossene, äussere und innere Druckluftkammern 26, 27 angeordnet, die kein Fördergut aufnehmen können. Ordnet man einer Rotorkammer 24 eine äussere Kammer 26 und eine innere Kammer 27 zu und macht man das Volumen der äusseren Kammer 26 zusammen mit dem der inneren Kammer 27 ähnlich gross wie das Volumen der Rotorkammer 24, dann ergibt sich bei der Uebergabe des Fördergutes durch den Uebergabedurchgang vom Zuspeiserotor 5 in den unteren Rotor 15 folgendes:

Der untere Rotor 15 kommt mit einer leeren aber unter Druck stehenden Rotorkammer 25 beim Uebergabedurchgang 8 an. Gleichzeitig dreht sich der Zuspeiserotor 5 mit der mit Fördergut gefüllten Rotorkammer 24 und den leeren, drucklosen inneren und äusseren Kammern 26 und 27 auf den Uebergabedurchgang 8. Die Druckluft in der unteren Rotorkammer 25 expandiert in die überdrucklosen Kammern 26 und 27, die zusammen das gleiche Volumen wie die untere Rotorkammer 25 haben. Die vorhandene Druckluft kann sich ungefähr auf das doppelte Volumen ausdehnen. Die Höhe des Druckes hat sich daher im wesentlichen auf die Hälfte abgebaut. Ist der Druckausgleich vollzogen, entleert sich die Zuspeise-Rotorkammer 24 in die untere Rotorkammer 25.

Mit dem im Bereich des Uebergangsdurchganges 8 herrschenden, reduzierten Druck wird über eine äussere Bohrung 28 im Aussenraum 29, zwischen Mantelrohr 22 und dem unteren Rotor 15, der gleiche Druck aufgebaut.

Dasselbe wird im Innenraum 30 zwischen der Antriebswelle 12, 20 und dem unteren Rotor 15, über innere Bohrungen 31 und 32 erreicht. Die Kammern 24, 26 und 27 im Zuspeiserotor 5 stehen unter reduziertem Druck und werden kurz vor Erreichen der Eintrittsöffnung 3 durch eine jeweils die drei Kammern beaufschlagende Bohrung im Endflansch 2 (nicht dargestellt) entlüftet. Es kann aber auch für die äussern 26, die Material-24 und die inneren Kammern 27 je eine gesonderte Entlüftungsbohrung vorgesehen werden. Der Ueberdruck in den ausgeblasenen Rotorkammern 25, der dem Förderdruck entspricht, wird auf diese Weise in zwei Stufen, zuerst vom unteren Rotor 15 zum Zuspeiserotor 5 auf die Hälfte (bei zwei Rotoren) und der Druck im Zuspeiserotor 5 danach vor der Eintrittsöffnung 3, bzw. die Bohrung im Flansch 2, auf den Aussendruck abgebaut. Indem der Aussenraum 29 und der Innenraum 30 vom reduzierten Druck beaufschlagt werden, ist das Druckgefälle $\Delta p$ in den kritischen Bereichen auf die Hälfte reduziert.

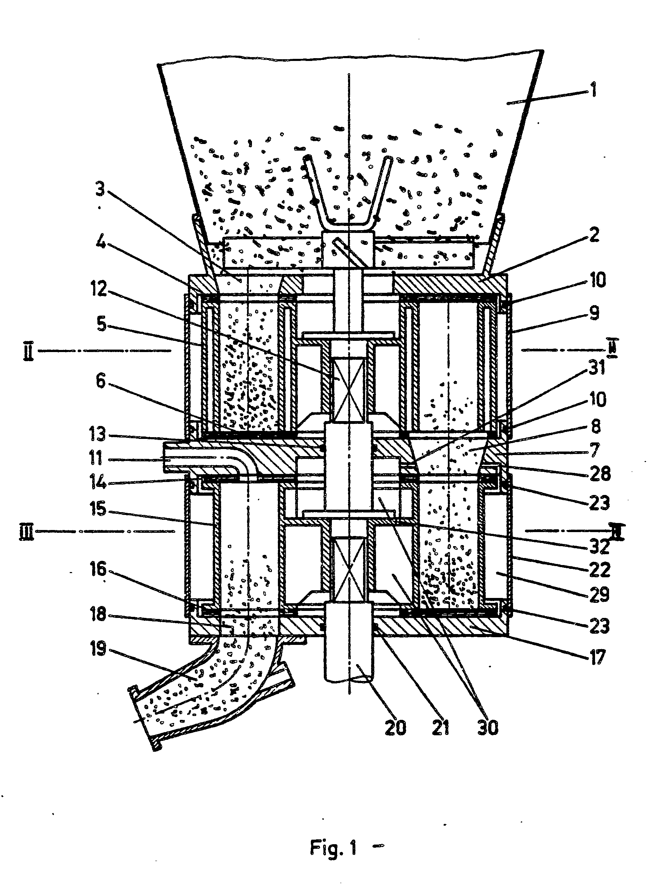

Das Volumen der Kammern 25 und 24 betrage je $V_1$, deren absolute Drucke $p_1$ bzw. $p_2$. Das Leervolumen bei mit Material gefüllter Kammer 24 bzw. 25 sei $x \cdot V_1$. Das Volumen des Kammerduos 26, 27 betrage $V_2$, der absolute Druck in der Lage nach Fig. 1 sei $p_2$. Dann gilt angenähert

$$V_1 \cdot p_1 = V_2 \cdot p_2 + x \cdot V_1 \cdot p_2 + V_1 \cdot p_2 \quad \text{und}$$

$$p_1/p_2 = V_2 + (x + 1)V_1/V_1$$

Die Luft in der Kammer 25 nach dem Ausblasen des Materials $V_1 \cdot p_1$ verteilt sich in der Lage der Kammern rechts in Fig. 1 auf die Kammern mit den Volumina $V_1$, $x \cdot V_1$ und $V_2$. Der Aussendruck ist absolut $p_0$. Bei perfektem Dichten bleibt der Druck in den Aussen- und Innenräumen 29 und 30 konstant. Er beträgt $p_2$. Daher sind allfälli-

ge Leckverluste auch kleiner, da $p_1 > p_2 > p_0$ und die Leckluftgeschwindigkeiten wären $c_1/c_2 = \sqrt{(p_1 - p_0)/(p_2 - p_0)}$. Sie können durch diese Ausführung beträchtlich herabgesetzt werden. Der Druck in den Räumen 29 und 30 könnte auch direkt über ein Reduzierventil vom Druckluftanschluss 11 erfolgen. Dies benötigte aber zusätzliche Mittel.

Auf dieser Idee fussend, ist es möglich, durch eine andere Zahl gemeinsamer Rotoren und andere Volumina der Druckluftkammern andere Druckverhältnisse zu schaffen. Ferner ist es möglich, den Ueberdruck in der Rotorkammer 25 des unteren Rotors 15 zum Ausstossen des Fördergutes aus der Rotorkammer 24 des Zuspeiserotors 5 über eine entsprechende Verbindung zu verwenden.

Auch kann die Entlüftungsöffnung an einen Zyklonabscheider mit Filter angeschlossen und die Abluft auf diese Weise entstaubt werden.

Im theoretischen Modell kann das $\Delta p = p\gamma - p_0$ mit beliebig vielen Rotoren $\gamma$ auf praktisch 0 abgebaut und die Distanz der unter Druck stehenden zur drucklosen Kammer beliebig verlängert werden.

Da die Dichtkräfte mindestens halbiert sind, kann die Maschine in Leichtbauweise, d. h. servicefreundlich, ausgeführt werden.

Das Mehrfach-Rotorsystem bringt folgende Vorteile:
— Der Förderdruck wird in einer oder mehreren Stufen reduziert. Dies gibt ein kleineres Druckgefälle von Stufe zu Stufe.
— Die Distanz vom Abblasloch zum Auspuff wird vervielfacht.
— Die Maschine kann in Leichtbauweise ausgeführt werden, da die Dichtkräfte verkleinert, z. B. mindestens halbiert sind.

**Ansprüche**

1. Materialzuspeiser für Anlagen zum pneumatischen Fördern von Schüttgütern, vorzugsweise grobkörnigen Gütern, z. B. Betontrockengemisch, mit Einfülltrichter (1) und Rührwerk, mit einem Rotor-Schleusendosator mit senkrechter Drehachse, mit feststehenden, den Zuspeiserotor (5) begrenzenden und abdichtenden Stirnscheiben (2, 17), mit je einer Oeffnung (3 bzw. 18) in den Stirnscheiben für den Gutseinlauf und den Gutsauslauf sowie mit einem Druckluftanschluss (11) in den Gutsauslaufbereich mit anschliessender Förderleitung (19) und mindestens einer, vorzugsweise ins Freie führenden, Oeffnung zur Druckentlastung zumindest eines Teils der Kammern des Rotor-Schleusendosators, dadurch gekennzeichnet, dass der Rotor-Schleusendosator mindestens zwei Rotoren, nämlich einen Zuspeiserotor (5) und einen durch einen Zwischenflansch (7) oder eine Zwischenscheibe hiervon getrennten Ausgangsrotor (15) aufweist, wobei der Zwischenflansch (7) mit einem Durchgang (8) versehen ist, derart, dass jeweils eine Materialkammer zweier einander zugeordneter Rotoren mit dem Durchgang (8) des Zwischenflansches (7) zur Koinzidenz bringbar ist und wobei mindestens der Zuspeiserotor (5) zusätzliche mit Druckluft aus der zugeordneten Kammer des darunterliegenden Rotors beaufschlagbare Kammern (26, 27) aufweist.

2. Materialzuspeiser nach Anspruch 1, dadurch gekennzeichnet, dass die Rotoren (5, 15) koaxial und die Kammern (24, 25) zur Aufnahme des Materials auf gleichen Teilkreisen parallelachsig angeordnet sind.

3. Materialzuspeiser nach Anspruch 2, gekennzeichnet durch einen gemeinsamen Antrieb, z. B. mittels einer gemeinsamen Rotorenwelle (12, 20).

4. Materialzuspeiser nach Anspruch 1, dadurch gekennzeichnet, dass die Anzahl der zusätzlichen Kammern (26, 27) des Zuspeiserotors (5) gleich oder ein Vielfaches der Anzahl seiner Materialkammern (24) ist.

5. Materialzuspeiser nach Anspruch 1, dadurch gekennzeichnet, dass in radialer Richtung der Durchmesser der oberen Mündung des Durchganges (8) des Zwischenflansches (7) grösser ist als der Durchmesser der unteren Mündung der darüberliegenden Kammer und der Durchmesser der unteren Mündung des Durchganges (8) dem Durchmesser der oberen Mündung der Kammer (25) des direkt unter dem Zwischenflansch (7) liegenden Rotors (15), entspricht so dass diese grössere Oeffnung mindestens in Teilen mit den Oeffnungen der zusätzlichen Kammern (26, 27) bei Koinzidenz zweier Rotorkammern (24, 25) und des Durchganges (8) durch den Zwischenflansch (7) übereinstimmt, um Druckluft aus der Kammer (25) des untenliegenden Rotors (15) in die zusätzlichen Kammern (26, 27) des oberen Rotors (5) abblasen zu lassen.

6. Materialzuspeiser nach Anspruch 1, dadurch gekennzeichnet, dass als Leitungen ausgebildete Druckausgleichs-Verbindungsmittel (28, 31, 32) aus dem Durchgang (8) in Ausgleichskammern (29, 30) des Rotorgehäuses des Ausgangsrotors (15) führen.

7. Materialzuspeiser nach Anspruch 1, dadurch gekennzeichnet, dass mindestens der Ausgangsrotor (15) in einem nach aussen vollständig abgedichteten, druckluftbeaufschlagbaren Gehäuse angeordnet ist.

8. Materialzuspeiser nach Anspruch 1, dadurch gekennzeichnet, dass die ins Freie führende Bohrung zum Entlüften der Kammern (24, 26, 27) des Zuspeiserotors (5) in Drehrichtung kurz vor der Oeffnung (3) für den Gutseinlauf angeordnet ist.

**Claims**

1. Material feeder for plant for the pneumatic conveyance of bulk materials, preferably coarse grained materials, eg. dry concrete mixture, with hopper (1) and stirrer, with a rotor charging valve dosaging device with vertical rotational axis with fixed front discs (2, 17) bordering the feed rotor (5) and acting as a seal and with, respectively, an opening (3 or 18) in the front discs for the inlet and the outlet of the material and with a compressed air connection (11) into the material outlet zone with connecting conveyor duct (19) and at least one opening, preferably leading into the open air, for the pressure relief of at least a portion of the chambers of the rotor charging valve dosaging device, characterized in that the rotor charging valve dosaging device has at least two rotors, namely a feed rotor (5) and an outlet rotor (15) separated herefrom by an intermediate flange (7) or an intermediate disc, whereby the intermediate flange (7) is provided with a passage (8) such that in each case a material chamber of two rotors associated to eachother is able to be brought to coincidence with the passage (8) of the intermediate flange (7) and whereby at least the feed rotor (5) has additional chambers (26, 27) which are able to be acted upon by compressed air from the associated chamber of the rotor lying beneath.

2. Material feeder according to Claim 1, characterized in that the rotors (5, 15) are arranged coaxially and the chambers (24, 25) to receive the material are arranged paraxially on equal divided circles.

3. Material feeder according to Claim 2, characterized by a common driving gear eg. by means of a common rotor shaft (12, 20).

4. Material feeder according to Claim 1, characterized in that the number of additional chambers (26, 27) of the feed rotor (5) is equal to, or is a multiple of, the number of its material chambers (24).

5. Material feeder according to Claim 1, characterized in that in radial direction the diameter of the upper orifice of the passage (8) of the intermediate flange (7) is greater than the diameter of the lower orifice of the chamber lying over it and the diameter of the lower orifice of the passage (8) corresponds to the diameter of the upper orifice of the chamber (25) of the rotor (15) lying directly under the intermediate flange (7), so that this larger opening corresponds at least in parts with the openings of the additional chambers (26, 27) on coincidence of two rotor chambers (24, 25) and of the passage (8) through the intermediate flange (7), in order to allow compressed air to be blown off out of the chamber (25) of the rotor (15) lying beneath into the additional chambers (26, 27) of the upper rotor (5).

6. Material feeder according to Claim 1, characterized in that pressure balance connection means (28, 31, 32) constructed as ducts lead out of the passage (8) in equalizing chambers (29, 30) of the rotor housing of the outlet rotor (15).

7. Material feeder according to Claim 1, characterized in that at least the outlet rotor (15) is arranged in a housing which is completely sealed externally and able to be acted upon by compressed air.

8. Material feeder according to Claim 1, characterized in that the bore leading into the open air for the removal of air of the chambers (24, 26, 27) of the feed rotor (5) is arranged in direction of rotation shortly in front of the opening (3) for the material inlet.

---

**Revendications**

1. Dispositif d'alimentation pour installation de transport pneumatique de produits en vrac, de préférence de matières granulaires grossières, par exemple de mélanges secs de béton comprenant une trémie de remplissage (1) munie d'un mécanisme d'agitation, un doseur à rotor comportant un axe de rotation vertical avec des disques frontaux fixes (2, 17) limitant et étanchant le rotor d'alimentation (5), une ouverture (3, 18) dans chacun des disques frontaux respectivement pour l'entrée et la sortie de la matière, ainsi qu'un raccord d'air comprimé (11) dans la région de la sortie de la matière, auquel est relié un conduit de transport (19), et au moins une ouverture débouchant de préférence à l'air libre pour décharger la pression d'au moins une partie des chambres du doseur à rotor, caractérisé en ce que le doseur à rotor comprend au moins deux rotors, notamment un rotor d'alimentation (5) et un rotor de sortie (15) séparé de celui-ci par une bride intermédiaire (7) ou un disque intermédiaire, cette bride intermédiaire (7) étant pourvue d'un passage (8) de sorte que respectivement, une chambre à matière de deux rotors coopérant peut être amenée à coïncider avec le passage (8) de la bride intermédiaire (7), et en ce qu'au moins le rotor d'alimentation (5) comporte des chambres supplémentaires (26, 27), pouvant être chargées avec de l'air comprimé provenant de la chambre correspondante du rotor sousjacent.

2. Dispositif d'alimentation selon la revendication 1, caractérisé en ce que les rotors (5, 15) sont montés coaxialement et les chambres (24, 25) pour recevoir la matière sont disposés avec les axes parallèles sur des cercles partiels similaires.

3. Dispositif d'alimentation selon la revendication 2, caractérisé par une transmission commune, par exemple au moyen d'un arbre de rotor commun (12, 20).

4. Dispositif d'alimentation selon la revendication 1, caractérisé en ce que le nombre des chambres supplémentaires (26, 27) du rotor d'alimentation (5) est égal ou un multiple de celui de ses chambres à matière (24).

5. Dispositif d'alimentation selon la revendication 1, caractérisé en ce que dans le sens radial, le diamètre de l'embouchure supérieure du passage (8) de la bride intermédiaire (7) est plus grand que le diamètre de l'embouchure inférieure de la chambre surjacente et en ce que le diamètre de l'embouchure inférieure du passage (8) correspond au diamètre de l'embouchure supérieure de la chambre (25) du rotor (15) situé directement sous la bride intermédiaire (7), de sorte que cette ouverture plus grande coïncide au moins partiellement avec les ouvertures des chambres supplémentaires (26, 27) lors de la coïncidence de deux chambres de rotor (24, 25) et du passage (8) traversant la bride intermédiaire (7), afin de permettre à l'air comprimé issu de la chambre (25) du rotor sous-jacent (15) d'être insufflé dans les chambres supplémentaires (26, 27) du rotor supérieur (5).

6. Dispositif d'alimentation selon la revendication 1, caractérisé en ce que les moyens de liaison et d'égalisation des pressions (28, 31, 32) réalisés sous la forme de conduits relient le passage (8) à des chambres d'égalisation (29, 30) de l'enveloppe du rotor de sortie (15).

7. Dispositif d'alimentation selon la revendication 1, caractérisé en ce qu'au moins le rotor de sortie (15) est monté dans une enveloppe complètement étanche vers l'extérieur et pouvant être chargé avec de l'air comprimé.

8. Dispositif d'alimentation selon la revendication 1, caractérisé en ce que l'ouverture débouchant à l'air libre pour ventiler les chambres (24, 26, 27) du rotor d'alimentation (5) sont disposées, en considérant le sens de la rotation, peu avant l'ouverture (3) prévue pour l'entrée du produit.

Fig. 1

Fig. 2

Fig. 3